# EUROPÄISCHE PATENTANMELDUNG

(11) **EP 0 677 675 A1**
(43) Veröffentlichungstag der Anmeldung: **18.10.1995**
(21) Anmeldenummer: 95104639.0
(22) Anmeldetag: 29.03.1995
(51) Int. Cl.: F16D 63/00, H02K 49/04

(54) **Scheibenbremse für Wirbelstrom- und Reibungsbremsung**

(30) Priorität: 12.04.1994 DE 4412538; 01.03.1995 DE 19507142
(71) Anmelder: KNORR-BREMSE SYSTEME FÜR NUTZFAHRZEUGE GmbH, 80809 München (DE)
(72) Erfinder: Haible, Gerhard, D-89174 Altheim/Alp (DE); Baumgartner, Hans, D-85368 Moosburg (DE); Bieker, Dieter, D-83064 Kirchdorf (DE); Schumacher, Jürgen, D-85386 Eching (DE)

(57) **Zusammenfassung**

Es wird eine Scheibenbremse offenbart, die in bekannter Weise mit einer an einem Bremsträger angeordneten Zuspannvorrichtung (20) zum Abbremsen einer Bremsscheibe (1) ausgerüstet ist. Um zusätzlich ein verschleißfreies Abbremsen zu ermöglichen, ist erfindungsgemäß eine Retarder-Bremseinrichtung (30,31) vorgesehen, die in der Bremsscheibe (1) Wirbelströme erzeugt.

## Beschreibung

Die vorliegende Erfindung bezieht sich auf eine Scheibenbremse gemäß dem Oberbegriff des Anspruchs 1.

Scheibenbremsen der gattungsgemäßen Art sind weitläufig im Einsatz und werden sowohl bei Schienenfahrzeugen als auch bei Straßenfahrzeugen verwendet, wobei im letzteren Fall insbesondere Personenkraftwagen zum überwiegenden Teil mit Scheibenbremsen ausgerüstet sind. Jedoch besteht derzeit auch bei Lastkraftwagen die Tendenz, diese anstelle der bislang üblichen Trommelbremsen nunmehr auch mit Scheibenbremsen auszurüsten. Nähere Einzelheiten über den Aufbau derartiger Scheibenbremsen für Nutzfahrzeuge finden sich in zahlreichen Anmeldungen und sonstigen Veröffentlichungen der Anmelderin, so daß für nähere Einzelheiten hierauf verwiesen werden darf.

Scheibenbremsen weisen bekanntlich eine hydraulisch oder - insbesondere im Nutzfahrzeugsektor - auch pneumatisch betätigte Zuspannvorrichtung auf, welche beidseitig einer Bremsscheibe angeordnete Bremsbacken gegen die Bremsflächen dieser Bremsscheibe drückt, so daß durch gegenseitige Reibung ein entsprechendes Bremsmoment hervorgerufen wird. Diese Reibung verursacht sowohl an den Bremsbacken als auch an den Reibflächen einen Abrieb, der in regelmäßigen Abständen einen Austausch der Bremsbacken und gelegentlich auch der Bremsscheibe erforderlich macht. So ist beispielsweise bei einer derzeit gebräuchlichen Nutzfahrzeug-Scheibenbremse ein maximaler Abrieb der Bremsfläche der Bremsscheibe von ca. 4 mm zulässig.

Da der Austausch der Brembacken und erst recht der der Bremsscheibe erhebliche Werkstattkosten nach sich zieht, wird insbesondere bei Nutzfahrzeugen angestrebt, den Verschleiß der Bremse zu verringern. Bei dieselgetriebenen Lastkraftwagen ist zu diesem Zweck die Verwendung einer zusätzlichen Bremseinrichtung bekannt, mittels der die Klappen des Dieselmotors geschlossen werden, so daß der Dieselmotor eine entsprechende Bremswirkung hervorruft, die zumindest bei mäßigen Verzögerungswerten einen Einsatz der eigentlichen Fahrzeugbremse überflüssig macht und diese somit schont.

Bei modernen Lastkraftwagen ist die Wirkung einer derartigen Motorbremse jedoch sehr gering, da die hoch aufgeladenen und relativ niedrig drehenden modernen Dieselmotoren nur noch eine schwache Bremsleistung abgeben. Es werden daher immer häufiger sogenannte Retarder eingesetzt, mit denen ebenfalls ein verschleißloses Bremsen möglich ist. Derartige Retarder basieren häufig auf der Bremswirkung eines hydraulischen Wandlers, der meist als integraler Bestandteil des Getriebes ausgeführt ist. Es werden jedoch auch solche Retarder verwendet, die auf dem bekannten Wirbelstromprinzip basieren, bei dem die gewünschte Bremswirkung durch Wirbelströme hervorgerufen wird, die von einem Magnetfeld in einer sich drehenden Scheibe hervorgerufen werden. Die bekanntesten Ausführungsformen derartiger Wirbelstrom-Retarder sind die von der Firma TELMA hergestellten Retarder, die in der Kardanwelle des betreffenden Fahrzeugs angeordnet werden und das in der Scheibe erzeugte Bremsmoment über die Kardanwelle auf die Räder übertragen.

Die mit den vorstehend genannten Retardern erzielte Schonung der Betriebsbremse und die damit einhergehende Verringerung der Wartungskosten derselben wird jedoch mit den nicht unerheblichen Zusatzkosten eines Retarders erkauft, so daß die betriebswirtschaftlichen Vorteile zumindest teilweise wieder kompensiert werden.

Der Erfindung liegt somit die Aufgabe zugrunde, eine verschleißfreie Bremse zu schaffen, die sich durch sehr günstige Kosten auszeichnet.

Diese Aufgabe wird durch die im Kennzeichnungsteil des Anspruchs 1 angegebene Maßnahme gelöst.

Der Lösungsgedanke der Erfindung ist demnach darin zu sehen, in der bei Einsatz einer Scheibenbremse ohnehin vorhandenen Bremsscheibe mittels einer geeigneten Einrichtung Wirbelströme zu erzeugen. Auf diese Weise wird erreicht, daß die Scheibenbremse zu einer Art von Kombinationsbremse erweitert wird, die neben der üblichen mechanischen Abbremsung auch eine berührungslose Abbremsung nach Art einer Wirbelstrombremse gestattet. Der hauptsächliche Vorteil diese erfindungsgemäßen Kombinationsbremse ist neben der äußerst kompakten und damit platz- und gewichtssparenden Bauweise darin zu sehen, daß für die Wirbelstrombremse keine zusätzliche Scheibe erforderlich ist, wodurch die Kosten entsprechend gesenkt werden. Da die Bremswirkung darüber hinaus unmittelbar bei den Rädern aufgebracht wird, kann weiterhin ein noch feinfühligeres Bremsverhalten als bei herkömmlichen Retardern erzielt werden.

Ein besonderer Vorteil der Erfindung ist darin zu sehen, daß die feinfühlige und verschleißfreie Retarder-Bremswirkung mit dem genannten geringen Aufwand auch bei nichtangetriebenen Achsen herbeigeführt werden kann, was mit einem herkömmlichen Retarder nicht möglich ist. Besondere Anwendungsgebiete der Erfindung liegen somit auch bei gezogenen Fahrzeugen bzw. Anhängern, die sich nach der Lehre der Erfindung besonders feinfühlig abbremsen lassen.

Gemäß der im Anspruch 2 angegebenen Weiterbildung der Erfindung ist es möglich, die Wirbelströme in der Bremsscheibe in an sich bekannter Weise mittels mindestens einer Spule zu erzeugen. Die gewünschte Bremswirkung kann auf diese Weise sehr einfach durch geeignete Ansteuerung der Spule erfolgen. In besonders vorteilhafter und platzsparender Anordnung erfolgt die Befestigung dieser elektromagnetischen Spule am Bremsträger der Scheibenbremse, und zwar in der Weise, daß die Spule der zugeordneten Reibfläche der Bremsscheibe unter Bildung eines Luftspalts gegenüberliegt.

Nach der Lehre des Anspruchs 4 ist es möglich, gegenüber jeder elektromagnetischen Spule am entsprechenden Ort der anderen Reibfläche der Bremsscheibe eine weitere Spule anzuordnen, die über einen ebenso großen Luftspalt auf diese Reibfläche einwirkt. Auf diese Weise ist eine besonders kompakte Bauform erzielbar, bei der gleichwohl ein starkes Magnetfeld mit entsprechend hoher Wirbelstrombildung erzeugt werden kann. Alternativ ist es jedoch auch möglich, den magnetischen Kreis durch ein Joch zu schließen, das ebenfalls am gegenüberliegenden Bereich der Bremsscheibe angeordnet ist.

Die von der jeweiligen Spule auf die Bremsscheibe aufgebrachte magnetische Feldstärke und die Stärke der hieraus resultierenden Wirbelströme sind auch von der Größe des Luftspalts abhängig. Dieser wird jedoch bei einer Scheibenbremse aufgrund des zunehmenden Abriebs der Reibflächen der Bremsscheibe im Laufe der Zeit größer. Falls die dadurch auftretende verringerte Bremsleistung bei gleicher Stellung des Betätigungsorgans der Wirbelstrombremse als nicht akzeptabel angesehen wird, ist es nach der Lehre des Anspruchs 8 möglich, jede elektromagnetische Spule und ggf. das dieser zugeordnete magnetische Joch jeweils in axialer Richtung verstellbar am Bremsträger zu befestigen und eine Verstellvorrichtung vorzusehen, die bei Abrieb der Reibflächen der Bremsscheibe die Größe des Luftspalts zwischen Reibfläche und Spule bzw. Joch konstant hält. Anstelle dieser mechanischen Regelung kann gemäß Anspruch 9 auch eine elektrische Regelung vorgesehen werden, bei der eine Regelungseinrichtung die von der jeweiligen Spule erzeugte magnetische Feldstärke unter Berücksichtigung des Abriebs der Bremsflächen der Bremsscheibe derart ändert, daß das jeweils vorgegebene Bremsmoment konstant bleibt. Diese Alternative erfordert keinen zusätzlichen mechanischen Aufwand und ist daher aus Kostengründen vorzuziehen.

Die Erfindung wird nachstehend anhand der Beschreibung von Ausführungsbeispielen unter Bezugnahme auf die Zeichnung näher erläutert. Es zeigen:
**Fig.1A bis 1C** eine erste Ausführungsform der erfindungsgemäßen Scheibenbremse in drei verschiedenen Ansichten;
**Fig.2A bis 2C** eine zweite Ausführungsform der erfindungsgemäßen Scheibenbremse in drei verschiedenen Ansichten; und
**Fig.3A bis 3C** eine dritte Ausführungsform der erfindungsgemäßen Scheibenbremse in drei verschiedenen Ansichten;

In der nachfolgenden Beschreibung ist als Ausführungsbeispiel der erfindungsgemäßen Scheibenbremse eine pneumatisch betätigte Scheibenbremse für Nutzfahrzeuge gezeigt; Einzelheiten einer derartigen Scheibenbremse können beispielsweise den deutschen Patentanmeldungen P 42 12 384 oder P 42 12 352 entnommen werden, auf die hier vollinhaltlich bezug genommen sei. Jedoch ist die Erfindung bei allen Arten von Scheibenbremsen verwendbar, so daß die hier gezeigte LKW-Druckluftbremse nur als eine mögliche Anwendungsform der Erfindung anzusehen ist.

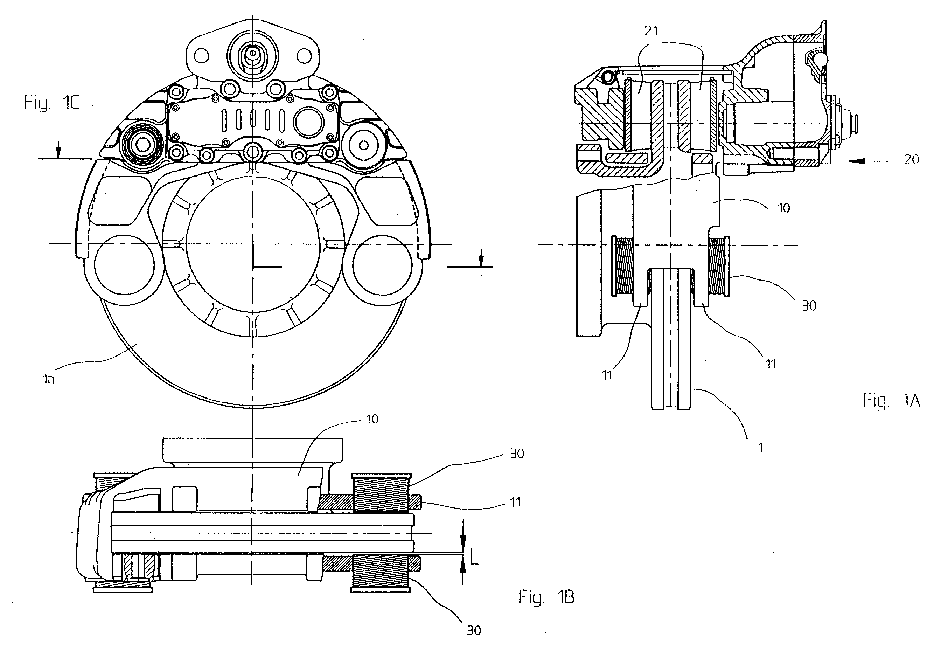

Gemäß Fig.1A besteht die Scheibenbremse aus einer Bremsscheibe 1, die an einer nicht näher gezeigten Achse eines Nutzfahrzeugs drehfest befestigt ist, einem fahrzeugfest angeordneten Bremsträger 10, der die Bremsscheibe 1 wie gezeigt übergreift, sowie aus einer am Bremsträger in axialer Richtung verschiebbar befestigten Zuspannvorrichtung 20. Wenn die Zuspannvorichtung 20 beim Bremsen mit Druckluft beaufschlagt wird, werden zwei Bremsbacken 21 gegen die Reibflächen 1a der Bremsscheibe 1 gepreßt (eine der beiden Reibflächen ist in Fig.1C erkennbar). Die Bremsscheibe 1 wird somit auf bekannte Weise durch mechanische Reibung abgebremst.

Erfindungsgemäß weist die Scheibenbremse eine Wirbelstrom-Bremseinrichtung auf, die durch vier Spulen 30 gebildet ist, die an Schenkelteilen 11 des Bremsträgers 10 an den aus den Figuren ersichtlichen Orten befestigt sind, und zwar derart, daß auf jeder Seite der Bremsscheibe jeweils zwei Spulen 30 angeordnet sind, wobei jeder Spule 30 eine weitere Spule 30 genau gegenüberliegt. Zwischen jeder Spule 30 und der zugeordneten Reibfläche 1a der Bremsscheibe 1 liegt ein Luftspalt L vor, der mindestens so groß gewählt ist, daß auch bei einer eventuellen thermischen Ausdehnung der Bremsscheibe 1 kein Reibkontakt mit der Oberfläche der betreffenden Spule herbeigeführt wird.

Wenn die Spulen 30 auf eine entsprechende Bremsbetätigung des Fahrers hin mit Strom versorgt werden, ruft das von diesen erzeugte Magnetfeld im Inneren der Bremsscheibe 1 Wirbelströme hervor, die unter gleichzeitiger Erwärmung der Bremsscheibe 1 eine entsprechende Abbremsung der Bremsscheibe 1 bewirken. Die Bremsscheibe 1 wird somit berührungsfrei abgebremst, so jeder Abrieb der Bremsbacken 21 sowie der Reibfläche 1a der Bremsscheibe 1 vermieden wird. Die erfindungsgemäße Scheibenbremse kann daher bei Betätigung dieser Wirbelstrom-Bremseinrichtung als Retarder verwendet werden.

Wie auch bei Verwendung eines herkömmlichen Retarders kann die erfindungsgemäße Wirbelstrom-Bremseinrichtung entweder durch ein zusätzliches, beispielsweise im Bereich des Lenkrads angebrachtes Betätigungsorgan bedient werden oder aber über das Bremspedal in der Weise, daß bei einer geringen Betätigung des Bremspedals zunächst die Wirbelstrom-Bremseinrichtung (ggf. in mehreren Stufen oder auch stufenlos änderbar in Abhängigkeit von der Bremspedal-Stellung) eingeschaltet und anschließend die Druckluftbremse betätigt wird, wenn eine noch stärkere Verzögerung erforderlich ist.

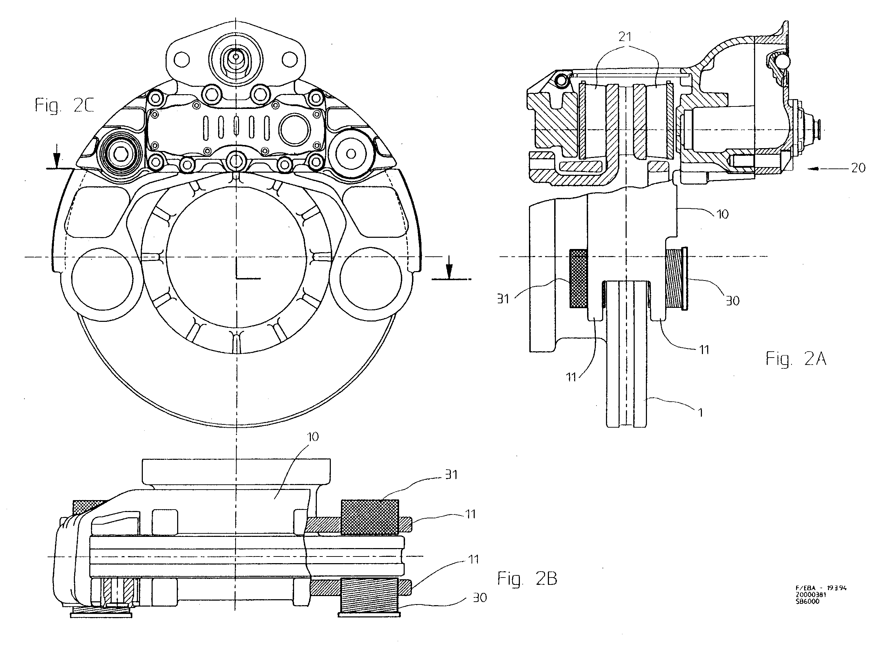

In den Fig.2A bis 2C ist ein zweites Ausführungsbeispiel der erfindungsgemäßen Scheibenbremse gezeigt, bei dem auf der einen Seite der Bremsscheibe 1 zwei Spulen 30 angebracht sind, denen jeweils ein Joch 31 gegenüberliegt, durch das der magnetische Kreis beim Einschalten der Spulen 30 geschlossen wird. Mit dieser Variante ist zwar keine so große Bremskraft wie beim ersten Ausführungsbeispiel erzielbar, jedoch werden die Herstellungskosten entsprechend gesenkt und es wird eine vereinfachte Stromzuführung zu den Spulen 30 ermöglicht. Gegebenenfalls ist es möglich, durch entsprechend stärkere Dimensionierung der Spulen 30 eine dem ersten Ausführungsbeispiel vergleichbare Bremsleistung zu erzielen. Wenn die Abmessungen und Materialien des Bremsträgers 10 dies gestatten, kann unter Umständen auf ein zusätzliches Joch 31 verzichtet werden, wobei dann die zugeordneten Bereiche des Bremsträgers 10 diese Rolle übernehmen.

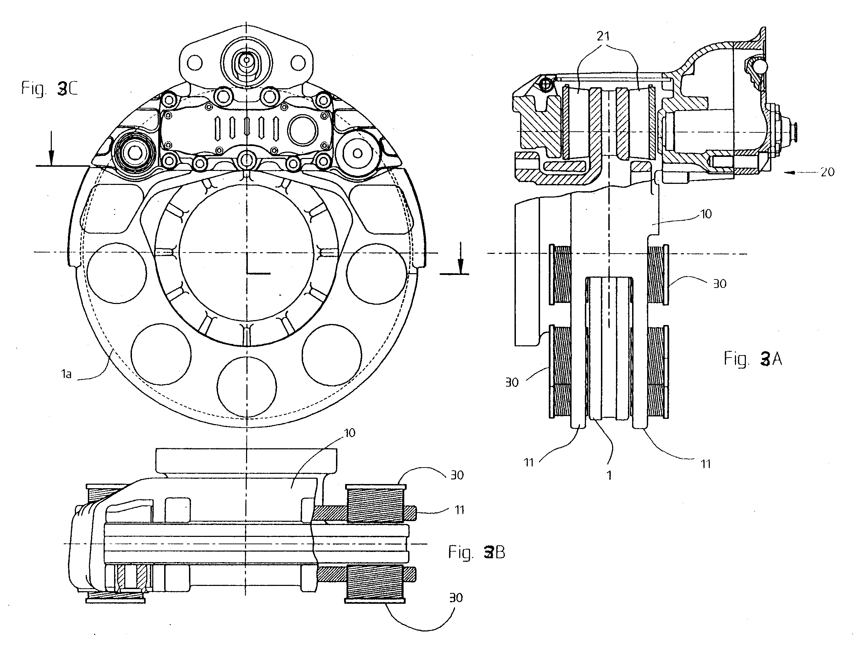

In den Fig.3A bis 3C ist schließlich ein drittes Ausführungsbeispiel der erfindungsgemäßen Scheibenbremse gezeigt, bei dem pro Seite der Bremsscheibe 1 fünf Spulen 30 in regelmäßigen Abständen am Umfang verteilt angebracht sind, wobei jeder Spule 30 eine andere Spule 30 genau gegenüberliegt, wie aus den Fig.3A und 3B ohne weiteres ersichtlich ist. Die Schenkelteile 11 sind in diesem Fall als Halbringteile ausgebildet. Es ist verständlich, daß bei dieser Anordnung eine maximale Bremsleistung erzielbar ist; nachteilig ist unter Umständen jedoch, daß die Bremsscheibe 1 in weiten Bereichen abgedeckt ist, so daß die Kühlung schlechter als bei den vorhergehenden Ausführungsbeispielen ist. Selbstverständlich können auch hier anstelle der gegenüberliegenden Spulen entsprechend angeordnete Joche 31 verwendet werden.

Es ist von der Sache her klar, daß die von der jeweiligen Spule 30 bzw. dem gegenüberliegenden Joch 31 auf die Bremsscheibe 1 aufgebrachte magnetische Feldstärke und die Stärke der hieraus resultierenden Wirbelströme sowie letztlich die sich ergebende Bremsleistung auch von der Größe des Luftspalts L abhängen. Dieser wird aufgrund des zunehmenden Abriebs der Reibflächen 1a der Bremsscheibe 1 im Laufe der Zeit jedoch größer.

Um gleichwohl (bei gleicher Stellung des Bremsbetätigungsorgans) eine konstante Bremsleistung zu erzielen, kann in Erwägung gezogen werden, eine elektrische Regelung vorzusehen, bei der eine (nicht gezeigte) Regelungseinrichtung die von der jeweiligen Spule 30 erzeugte magnetische Feldstärke unter Berücksichtigung des Abriebs der Bremsflächen der Bremsscheibe derart ändert, daß das jeweils vorgegebene Bremsmoment konstant bleibt. Da bei den meisten Scheibenbremsen ohnehin eine Nachstelleinrichtung vorhanden ist, die ein den jeweiligen Abrieb der Bremsflächen 1a der Bremsscheibe 1 anzeigendes Ausgangssignal liefert (siehe z.B. die in der deutschen Patentanmeldung P 42 12 387 beschriebene Ausführungsform), kann dieses Ausgangssignal, ggf. in geeignet modifizierte Weise, der Regelungseinrichtung zugeführt werden, so daß noch nicht einmal ein zusätzlicher Sensor erforderlich ist.

Alternativ hierzu kann auch in Erwägung gezogen werden, jede elektromagnetische Spule 30 und ggf. das dieser zugeordnete magnetische Joch 31 jeweils in axialer Richtung der Bremsscheibe 1 verstellbar am Bremsträger 10 zu befestigen und eine Verstellvorrichtung vorzusehen, die bei Abrieb der Reibflächen 1a der Bremsscheibe 1 die Größe des Luftspalts L zwischen Reibfläche 1a und Spule 30 bzw. Joch 31 konstant hält, wobei diese Verstellvorrichtung von ebenfalls einer auf das Ausgangssignal der Nachstelleinrichtung ansprechenden Regelungseinrichtung geeignet angesteuert werden kann.

Bei der die erfindungsgemäße Scheibenbremse tragenden Achse kann es sich sowohl um eine angetriebene als auch um eine nicht-angetriebene Achse handeln. Die Erfindung ist somit insbesondere auch bei Anhängerfahrzeugen verwendbar, wo mit sehr geringem Aufwand eine verschleißfreie und darüber hinaus sehr feinfühlig dosierbare Bremswirkung erzielbar ist.

## Patentansprüche

1. Scheibenbremse mit einer an einem Bremsträger (10) angeordneten Zuspannvorrichtung (20) zum Abbremsen einer Bremsscheibe (1),
*gekennzeichnet durch* eine in der Bremsscheibe (1) Wirbelströme erzeugende Einrichtung (30).

2. Scheibenbremse nach Anspruch 1, *dadurch gekennzeichnet*, *daß* die Wirbelströme erzeugende Einrichtung durch mindestens eine elektromagnetische Spule (30) gebildet ist.

3. Scheibenbremse nach Anspruch 2, *dadurch gekennzeichnet*, *daß* die mindestens eine elektromagnetische Spule (30) an dem Bremsträger (10) befestigt ist und der zugeordneten Reibfläche der Bremsscheibe (1) unter Bildung eines Luftspalts (IL gegenüberliegt.

4. Scheibenbremse nach Anspruch 3, *dadurch gekennzeichnet*, *daß* jeder elektromagnetischen Spule (30) am entsprechenden Ort der anderen Reibfläche der Bremsscheibe (1) eine weitere Spule (30) gegenüberliegt, die über einen ebenso großen Luftspalt (L) auf diese Reibfläche einwirkt.

5. Scheibenbremse nach Anspruch 3, *dadurch gekennzeichnet*, *daß* jeder elektromagnetischen Spule (30) am entsprechenden Ort der anderen Reibfläche der Bremsscheibe (1) ein magnetisches Joch (31) gegenüberliegt.

6. Scheibenbremse nach einem der Ansprüche 3 bis 5, *dadurch gekennzeichnet*, *daß* jede elektromagnetische Spule (30) und ggf. das dieser zugeordnete magnetische Joch (31) an einem entsprechenden Schenkelteil (11) des Bremsträgers (10) befestigt ist.

7. Scheibenbremse nach Anspruch 6, *dadurch gekennzeichnet*, *daß* jedes Schenkelteil (11) im Anschluß an einen Befestigungsbereich der Zuspannvorrichtung (20) ausgebildet ist.

8. Scheibenbremse nach einem der Ansprüche 3 bis 7, *dadurch gekennzeichnet*, *daß* jede elektromagnetische Spule (30) und ggf. das dieser zugeordnete magnetische Joch (31) in axialer Richtung verstellbar am Bremsträger (10) befestigt ist und daß eine Verstellvorrichtung vorgesehen ist, die bei Abrieb der Bremsflächen der Bremsscheibe (1) die Größe des Luftspalts zwischen Reibfläche und Spule (30) bzw. Joch (31) konstant hält.

9. Scheibenbremse nach einem der Ansprüche 2 bis 7, *gekennzeichnet durch* eine Regelungseinrichtung, die die von der jeweiligen Spule (30) erzeugte magnetische Feldstärke unter Berücksichtigung des Abriebs der Bremsflächen der Bremsscheibe (1) derart ändert, daß das jeweils vorgegebene Bremsmoment konstant bleibt.

10. Scheibenbremse nach Anspruch 8 oder 9, *dadurch gekennzeichnet*, *daß* der Abrieb der Bremsflächen der Bremsscheibe (1) von einem Ausgangssignal einer Nachstelleinrichtung der Zuspannvorrichtung (20) abgeleitet wird.

11. Wirbelstrombremse mit einer in einer Bremsscheibe (1) Wirbelströme erzeugenden Einrichtung, *dadurch gekennzeichnet*, *daß* die Bremsscheibe (1) Bestandteil einer Scheibenbremse ist, die eine an einem Bremsträger (10) angeordnete Zuspannvorrichtung (20) zum Abbremsen der Bremsscheibe (1) aufweist.
